# EUROPÄISCHE PATENTSCHRIFT

(11) **EP 3 922 319 B1**
(45) Veröffentlichungstag und Bekanntmachung des Hinweises auf die Patenterteilung: **27.09.2023**
(21) Anmeldenummer: 21178830.2
(22) Anmeldetag: 10.06.2021
(51) Int. Cl.: A62C 99/00, G09B 19/00

(54) **BRANDSCHUTZÜBUNGSVORRICHTUNG**
FIRE SAFETY TRAINING DEVICE
DISPOSITIF D'EXERCICE INCENDIE

(30) Priorität: 10.06.2020 DE 102020115486
(43) Veröffentlichungstag der Anmeldung: 15.12.2021
(73) Patentinhaber: AISCO Firetrainer GmbH, 79232 March (DE)
(72) Erfinder: STREUBEL, Gunter, 79098 Freiburg (DE)
(74) Vertreter: Mertzlufft-Paufler, Cornelius

(56) Entgegenhaltungen:
- EP-A1- 1 884 262
- WO-A2-01/41874
- WO-A2-2005/094232
- JP-A- 2015 068 926

## Beschreibung

Die Erfindung betrifft eine Brandschutzübungsvorrichtung, zur Simulation eines Flüssigkeitsbrandes, mit wenigstens einer ersten Brennervorrichtung.

Brandschutzübungsvorrichtungen eingangs genannter Art sind bereits an sich bekannt und werden dazu eingesetzt, um das Erlernen einer korrekten Löschtechnik und die Wahl eines korrekten Löschmittels an Übungsteilnehmer zu vermitteln.

Die Brandschutzübungsvorrichtungen weisen dazu eine Brennervorrichtung auf, um mittels dieser einen Brand zu entfachen. Der Brand kann dann durch einen Übungsteilnehmer anhand eines geeigneten Löschmittels gelöscht werden. Derartige Brandschutzübungsvorrichtungen sind etwa aus JP 2015 068926 A, WO 01/41874 A2, WO 2005/094232 A2 und EP 1 884 262 A1 vorbekannt.

Man kennt auch bereits Brandschutzübungsvorrichtungen zur Simulation eines Flüssigkeitsbrandes. Derartige Brandschutzübungsvorrichtungen weisen in der Regel eine Wasserwanne mit Wasser auf. Zur Simulation eines Flüssigkeitsbrandes wird beispielsweise eine brennbare Substanz, die leichter als Wasser ist, in das Wasserbad gegeben und entzündet.

Nachteilig bei derartigen Brandschutzübungsvorrichtungen ist allerdings das relativ hohe Gewicht, so dass es schwierig bis unmöglich für eine Person ist, einen Transport alleine zu bewerkstelligen.

Ein weiterer Nachteil besteht darin, dass ein Löschen eines Flüssigkeitsbrandes in der Regel durch Löschschaum als Löschmittel erfolgt. Somit kommt es zu einer Kontamination des Wassers im Wasserbad mit dem Löschschaum, so dass die Entsorgung aufwendig und teuer ist. Schließlich muss das kontaminierte Wasser häufig als Sondermüll behandelt werden.

Weiter ist es für das Erlernen der korrekten Löschtechnik nachteilig, dass es durch den Sprühstoß des Löschmittels zu einer Rotation der auf dem Wasser schwimmenden brennbaren Substanz kommt. Somit ist auch keine besonders realitätsnahe Simulation eines Flüssigkeitsbrandes möglich.

Somit besteht ein Bedarf nach einer Brandschutzübungsvorrichtung, mit welcher ein realitätsnahes Brandszenario erzeugbar ist, um den bestmöglichen Lerneffekt erreichen zu können.

Es besteht daher die Aufgabe, die Gebrauchseigenschaften einer Brandschutzübungsvorrichtung der eingangs genannten Art zu verbessern.

Die Lösung dieser Aufgabe wird erfindungsgemäß durch eine Brandschutzübungsvorrichtung mit den Merkmalen nach Anspruch 1 erzielt. Hierzu ist vorgesehen, dass die Austrittsöffnungen einer zweiten oder einer dritten Brennervorrichtung zumindest teilweise in einer Rinne angeordnet sind. Die Rinne ist dabei dazu eingerichtet, in Gebrauchsstellung mit Wasser gefüllt zu sein oder zu werden, so dass die wenigstens eine Gasleitung unter Wasser liegt.

Das Gas strömt somit zunächst in das Wasser aus und wird im Wasser nochmals verwirbelt, was die Erzeugung einer besonders realitätsnahen Flamme eines Flüssigkeitsbrandes ermöglicht. Zudem hat das Wasser eine gewisse Kühlungseigenschaft, die durch dessen Verdunstung hervorgerufen wird und die Materialien vor einer ungewollten Verformung besser schützen können (Die verwendeten Metallbleche würden sich sonst bei typischen Gasflammentemperaturen von 600-800°C sehr schnell verformen). Weiter ist es auf diese Art und Weise möglich, die Flamme beabstandet zur Gasleitung zu entfachen, da das Gas erst an der Wasseroberfläche entzündet werden kann.

Bevorzugt ist es hierbei, wenn die Austrittsöffnungen jeweils nach unten gerichtet sind. Denn in diesem Fall strömt das Gas aufgrund des hohen Drucks zunächst etwas in das Wasser ein (nach unten), wird dabei verwirbelt, und steigt erst dann (über einen dann verlängerten Aufstiegsweg) nach oben im Wasser auf bis zur Wasseroberfläche, wo der eigentliche Brennvorgang stattfindet. Das heißt aufgrund der Ausrichtung der Austrittsöffnungen kann ein aus der Gasleitung ausströmender Gasstrom somit von der Wasseroberfläche des eingefüllten Wassers wegzeigen.

Gemäß einer besonders bevorzugten Ausgestaltung können die Austrittsöffnungen der (Unter-Wasser-)Gasleitung mit Ventilen gesichert sein, die ein Eindringen von Wasser in die Gasleitung verhindern. Dadurch ist ein besonders sicherer Betrieb, insbesondere beim Starten des Flüssigbrenners, möglich. Diese Ventile können insbesondere von noch näher zu erläuternden Kupplungselementen bereitgestellt werden.

Durch das Abgeben von Gas unter Wasser und die dabei entstehende Homogenisierung bzw. Verbreiterung des Gasstroms lässt sich somit ein "Flüssigbrenner" realisieren, der realitätsnah einen Flüssigbrand simuliert, wie er etwa entsteht, wenn Benzin auf Wasser schwimmt und sich an der Luft entzündet. Hierfür ist wohlgemerkt kein Flüssigbrennstoff erforderlich, sondern das aus dem Wasser aufsteigende fein verteilte Gas simuliert nur sehr realitätsnah den Brand eines flüssigen Brennstoffs auf der Wasseroberfläche.

Die hier diskutierte Brandschutzübungsvorrichtung kann beispielsweise wenigstens eine Kopplungsstelle zur Erweiterung der Brandschutzübungsvorrichtung mit wenigstens einer weiteren, insbesondere abnehmbaren Brennervorrichtung, aufweisen. Durch die Kopplungsstelle ist es somit möglich, eine möglichst kompakte Basisvorrichtung auszubilden, die bei Bedarf durch wenigstens eine weitere Brennstufe modular erweiterbar ist, sollte ein anderes Brandszenario und/oder ein größerer Brand simuliert werden. Dadurch kann das Gewicht der Brandschutzübungsvorrichtung in der Basisversion auf ein Minimum reduziert werden, was für eine große Anzahl an Brandschutzübungen vollkommen ausreichend ist. Damit lässt sich die Brandschutzübungsvorrichtung einfacher transportieren und aufbauen.

Alternativ oder ergänzend kann auch vorgesehen sein, dass die Brandschutzübungsvorrichtung eine zweite Brennervorrichtung aufweist, wobei die erste Brennervorrichtung als ein Punktbrenner, zum Beispiel als eine Feststoffbrand-Brennervorrichtung, ausgestaltet ist und wobei die zweite Brennervorrichtung als wenigstens ein Rahmenbrenner, zum Beispiel als eine Flüssigkeitsbrand-Brennervorrichtung, ausgestaltet ist. Somit ist es möglich, mittels einer Brandschutzübungsvorrichtung unterschiedliche Brandszenarien simulieren und den Löschvorgang bei diesen trainieren zu können.

Alternativ oder ergänzend zu einer oder beiden vorgenannten Ausgestaltungen kann auch vorgesehen sein, dass die zweite Brennervorrichtung wenigstens eine Gasleitung mit mehreren Austrittsöffnungen aufweist, und dass zwischen den Gasleitungen und/oder innerhalb einer Ringgasleitung eine Sauerstoffzuführöffnung ausgebildet ist. Vorzugsweise ist zwischen den wenigstens zwei Gasleitungen und/oder innerhalb der Ringgasleitung keine Wasserwanne angeordnet. Weiter bevorzugt kann die zweite Brennervorrichtung wenigstens zwei beabstandet zueinander angeordnete Gasleitungen und/oder zwei voneinander beanstandete Leitungsabschnitte einer Ringgasleitung aufweisen. Durch die Ausbildung einer Sauerstoffzuführöffnung ist es möglich, dass durch den Venturi-Effekt eine verbesserte Sauerstoffversorgung einer durch die zweite Brennervorrichtung erzeugten Flamme erreichbar ist. Dabei kann Sauerstoff von unten angesaugt und zum Brandherd gelangen. Anders als bei vorbekannten Brandschutzübungsvorrichtungen ohne Sauerstoffzuführöffnung, die an der Stelle der Sauerstoffzuführöffnung zum Beispiel eine Wasserwanne aufweisen, kann dadurch eine deutlich homogenere Flamme erzeugt werden. Bei Brandschutzübungsvorrichtung ohne Sauerstoffzuführöffnung sind hingegen häufig "hohle Flammen" zu beobachten, die keine realitätsnahe Simulation eines Flüssigkeitsbrandes darstellen.

Nachfolgend werden weitere vorteilhafte Ausgestaltungen der Erfindung beschrieben.

Gemäß einer vorteilhaften Weiterbildung kann vorgesehen sein, dass die Austrittsöffnungen wenigstens einer Gasleitung, zum Beispiel die Austrittsöffnungen der bereits genannten wenigstens einen Gasleitung, in regelmäßigen Abständen zueinander und/oder über die gesamte oder nahezu die gesamte Länge der wenigstens einen Gasleitung ausgebildet sind. Somit kann durch relativ gleichmäßig aus den Austrittsöffnungen ausströmendes Gas eine besonders großflächige und dennoch homogene Flamme erzeugt werden.

Um die Brandschutzübungsvorrichtung bedarfsgerecht durch eine oder mehrere zusätzliche Brennstufen erweitern zu können, kann gemäß einer weiteren Ausführungsvariante vorgesehen sein, dass die Brandschutzübungsvorrichtung eine dritte Brennervorrichtung aufweist. Vorzugsweise kann die Brandschutzübungsvorrichtung eine vierte Brennervorrichtung oder sogar mehr als vier Brennervorrichtungen aufweisen, die entsprechend andockbar sind. Insbesondere kann/können die dritte Brennervorrichtung und/oder die vierte Brennervorrichtung als wenigstens ein Rahmenbrenner, vorzugsweise als eine Flüssigkeitsbrand-Brennervorrichtung, ausgestaltet sein. Somit ist es möglich, anhand der Brandschutzübungsvorrichtung auch Brandschutzübungen für größere Brände durchzuführen, die zum Beispiel für das Training von Feuerwehrleuten erforderlich sind. Es versteht sich, dass die jeweiligen Kopplungen zwischen diesen weiteren Modulen wie zuvor beschrieben realisiert werden können, insbesondere derart, dass alle Brennervorrichtungen der Brandschutzübungsvorrichtung aus nur einer einzigen Brennstoffquelle (z.B. eine Gasflasche) versorgt werden können.

Um eine besonders gute Sauerstoffversorgung der Flamme des erzeugten Brandes erreichen zu können, kann es vorgesehen sein, dass ein Durchmesser eines Öffnungsquerschnitts einer Sauerstoffzuführöffnung, zum Beispiel der bereits zuvor genannten Sauerstoffzuführöffnung, mindestens die Hälfte, insbesondere mindestens zwei Drittel, insbesondere mindestens drei Viertel, insbesondere in etwa der Strecke, eines Abstandes zwischen zwei gegenüberliegenden Gasleitungen und/oder zwischen zwei gegenüberliegenden Gasleitungsabschnitten beträgt.

Alternativ oder ergänzend dazu kann es vorgesehen sein, dass eine Fläche, insbesondere eines Öffnungsquerschnitts, der Sauerstoffzuführöffnung mindestens die Hälfte, insbesondere mindestens zwei Drittel, insbesondere mindestens drei Viertel, insbesondere etwa, einer Fläche zwischen zwei gegenüberliegenden Gasleitungen und/oder einer Fläche innerhalb einer Ringgasleitung beträgt. Anders als bei vorbekannten Brandschutzübungsvorrichtungen mit einer Wasserwanne, kann eine deutlich homogener ausgebildete Flamme erzeugt werden. Insbesondere kann somit vorgesehen sein, dass die wenigstens eine Gasleitung die Sauerstoffzuführöffnung begrenzen.

Zur vereinfachten Bedienung und zur vereinfachten Durchführung einer Brandschutzübung kann die Brandschutzübungsvorrichtung eine Steuerungsvorrichtung, insbesondere eine elektronische Steuervorrichtung, aufweisen, mittels welcher eine Einstellung eines Brandmodus und/oder das Initiieren und Abschalten eines simulierten Brandes möglich ist.

Gemäß einer weiteren vorteilhaften Weiterbildung kann es vorgesehen sein, dass die Brandschutzübungsvorrichtung einen Energiespeicher, insbesondere einen Akku und/oder einen Gasspeicher, aufweist und/oder dass die Brandschutzübungsvorrichtung einen Netzanschluss und/oder einen Gasanschluss aufweist. Somit ist ein autarker Betrieb der Brandschutzübungsvorrichtung möglich. Im Falle des Betriebes durch den Anschluss an ein bestehendes Stromnetz und/oder Gasnetz kann hingegen Gewicht reduziert werden, was wiederum den Transport der Brandschutzübungsvorrichtung vereinfacht.

Zum vereinfachten Transport der Brandschutzübungsvorrichtung kann diese gemäß einer weiteren vorteilhaften Weiterbildung wenigstens ein Rad, vorzugsweise wenigstens zwei Räder, aufweisen. Um das Ziehen und/oder Schieben der Brandschutzübungsvorrichtung durch einen Nutzer zu erleichtern, kann die Brandschutzübungsvorrichtung eine Deichsel aufweisen.

Die Brandschutzübungsvorrichtung kann dazu eingerichtet sein, durch Brennervorrichtungen einrichtbare Brennstufen modular nach Bedarf erweitern oder reduzieren zu können.

Um den Brand für die Durchführung einer Brandschutzübung möglichst einfach entfachen zu können, kann die Brandschutzübungsvorrichtung wenigstens eine Zündungsvorrichtung aufweisen. Insbesondere kann die Zündungsvorrichtung als eine Hochspannungs-Zündungsvorrichtung ausgebildet sein. Diese ist besonders langlebig und wartungsarm.

Gemäß einer weiteren vorteilhaften Weiterbildung kann es vorgesehen sein, dass die wenigstens eine Kopplungsstelle wenigstens eine Anschlussstelle für eine Gasleitung, vorzugsweise wenigstens zwei Anschlussstellen für jeweils eine Gasleitung, aufweist. Somit ist eine einfache Ankopplung weiterer Brennstufen möglich. Die Anschlussstellen können insbesondere mit Ventilen gesichert sein, um nur in gekoppelter Stellung einen Gasstrom zu ermöglichen.

Gemäß einer bevorzugten Ausgestaltung ist die wenigstens eine Anschlussstelle somit als ein Kupplungsventil ausgestaltet. Das Kupplungsventil kann hierbei ein Kupplungselement umfassen, das mit einem korrespondierenden Gegenkopplungselement koppelbar ist. Dadurch kann das Kupplungsventil so ausgestaltet sein, dass das Kupplungselement des Kupplungsventil mit der ersten Brennervorrichtung und das korrespondierende Gegenkupplungselement des Kupplungselements mit einer weiteren, insbesondere zweiten oder dritten, Brennervorrichtung der Brandschutzübungsvorrichtung verbunden ist.

Mit anderen Worten kann also ein erstes Modul (zum Beispiel ein Basismodul oder aber ein erstes Anbaumodul) der Brandschutzübungsvorrichtung über die Anschlussstelle schlauchlos (aber dennoch druckdicht) mit einem weiteren Modul (insbesondere dem besagten ersten Anbaumodul oder einem zweiten Anbaumodul) koppelbar sein. Hierbei kann das besagte Kupplungselement an einem Modul und das korrespondierende Gegenkupplungselement an einem weiteren Modul der Brandschutzübungsvorrichtung angeordnet sein. Durch das schlauchlose Kuppeln der Module kann die Brandschutzübungsvorrichtung insgesamt sehr kompakt ausgestaltet werden, sodass auch dann, wenn mehrere Module miteinander gekoppelt sind, die Brandschutzübungsvorrichtung mobil bewegt werden kann, ohne herabhängende Schläuche oder dergleichen. Damit kann die Brandschutzübungsvorrichtung schneller und einfacher für Übungen bereitgestellt und/oder angepasst werden.

Gemäß meiner besonders vorteilhaften Ausgestaltung kann es vorgesehen sein, dass die Brandschutzübungsvorrichtung eine Abschirmvorrichtung aufweist, die zwischen einer Betriebsposition und einer Abschaltposition verstellbar ist. Insbesondere kann die Abschirmvorrichtung um eine Schwenkachse verstellbar sein. Vorzugsweise kann die Abschirmvorrichtung in Betriebsposition eine Steuerungsvorrichtung, zum Beispiel die bereits zuvor genannte Steuerungsvorrichtung, gegen Flammen schützen, insbesondere indem die Abschirmvorrichtung auf die Steuerungsvorrichtung positioniert, insbesondere umgeklappt, ist. Die Abschirmvorrichtung kann in Abschaltposition eine Sauerstoffzuführöffnung, zum Beispiel die bereits zuvor genannte Sauerstoffzuführöffnung, und/oder wenigstens eine Brennervorrichtung abdecken. Somit ist einerseits der Transport vereinfacht und andererseits die oder wenigstens eine Brennervorrichtung besser gegen Beschädigungen geschützt.

Eine erfindungsgemäße Brandschutzübungsvorrichtung kann auch eine Raucherzeugungsvorrichtung aufweisen. Gerade bei der Verwendung von Gas als Brennstoff ist lediglich die Erzeugung von relativ sterilen, also rauchfreien, Bränden möglich. Diese Art eines Brandes entspricht in der Regel allerdings nicht der Realität, wobei echte Brände häufig zu starker Rauchentwicklung führen. Um dies besser simulieren zu können, kann die Brandschutzübungsvorrichtung daher eine Raucherzeugungsvorrichtung aufweisen.

Besonders vorteilhaft kann es dabei sein, wenn die Raucherzeugungsvorrichtung eine Heizeinheit und/oder wenigstens eine Behälterschnittstelle zum Anschluss eines Rauchmittelbehälter aufweist. Dadurch kann ein Rauchmittelbehälter einfach mit der Brandschutzübungsvorrichtung gekoppelt werden und somit durch Verdampfen des Rauchmittels ein realitätsnaher Eindruck eines Brandes erzeugt werden.

Gemäß einer besonders vorteilhaften Weiterbildung kann es vorgesehen sein, dass die Raucherzeugungsvorrichtung eine, insbesondere von einer Gasleitung oder den Gasleitungen der Brennervorrichtungen separat ausgebildete Rauchgasleitung aufweist, um das durch die Raucherzeugungsvorrichtung erzeugte Rauchgas zum Ort des Feststoffbrandes und/oder des Flüssigkeitsbrandes zu transportieren. Dies hat den Vorteil, dass es nicht zu einer Verdünnung des Brennstoffes Gas durch den Rauch kommt. Zudem können die Flammen- und Rauchentwicklung unabhängig voneinander eingestellt werden.

Um die Stabilität der Brandschutzübungsvorrichtung zu erhöhen, kann es vorgesehen sein, dass die erste Brennervorrichtung und/oder jede weitere Brennervorrichtung ein Trägergestell aufweist/aufweisen.

Um unterschiedliche Brandszenarien einstellen zu können, kann es gemäß einer vorteilhaften Weiterbildung vorgesehen sein, dass die Brandschutzübungsvorrichtung wenigstens eine Aufsetzeinheit aufweist, die insbesondere mit der ersten Brennervorrichtung koppelbar ist, um ein spezielles Brandszenario zu simulieren. Beispielsweise kann die wenigstens eine Aufsetzeinheit in Form eines Mülleimers und/oder in Form eines Bildschirms ausgebildet sein. Insbesondere kann es dabei vorgesehen sein, dass die Aufsetzeinheit dazu eingerichtet ist, dass durch die während des Betriebes der Brennervorrichtung erzeugten Flammen aus einer Öffnung der Aufsetzeinheit herauslodern.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigen:
- Fig. 1-4: mehrere Ansichten einer möglichen Ausführungsvariante einer Basisversion einer Brandschutzübungsvorrichtung mit nur einer Brennstufe, die durch eine Brennervorrichtung ausgebildet ist, wobei die Brennervorrichtung als ein Punktbrenner ausgebildet ist,
- Fig. 5-8: mehrere Ansichten einer möglichen Ausführungsvariante einer erfindungsgemäßen Brandschutzübungsvorrichtung, wobei die in Figur 1 gezeigte Basisversion über ihre Kopplungsstelle um eine zweite Brennstufe erweitert worden ist und wobei die zweite Brennervorrichtung als ein Rahmenbrenner mit voneinander beabstandeten Austrittsöffnungen ausgebildet ist,
- Fig. 9-12: mehrere Ansichten einer möglichen Ausführungsvariante einer erfindungsgemäßen Brandschutzübungsvorrichtung, wobei die Vorrichtung aus den Fig. 5-8 über eine weitere Kopplungsstelle um eine dritte Brennstufe erweitert ist und wobei die dritte Brennervorrichtung ebenfalls als ein Rahmenbrenner mit voneinander beabstandeten Austrittsöffnungen ausgebildet ist.
- Figur 13: eine Aufsicht auf die zweite Brennervorrichtung des ersten Anbaumoduls einer erfindungsgemäßen Brandschutzübungsvorrichtung, die eine Ringgasleitung ausbildet,
- Figur 14: eine Seitenansicht auf einen ersten Leitungsabschnitt der Ringgasleitung aus Figur 13,
- Figur 15: eine Seitenansicht auf einen mittleren Leitungsabschnitt der Ringgasleitung aus Figur 13,
- Figur 16: eine Aufsicht auf die dritte Brennervorrichtung des zweiten Anbaumoduls einer erfindungsgemäßen Brandschutzübungsvorrichtung, die eine Ringgasleitung ausbildet,
- Figur 17: eine Seitenansicht auf einen ersten Leitungsabschnitt der Ringgasleitung aus Figur 16, und
- Figur 18: eine Seitenansicht auf einen mittleren Leitungsabschnitt der Ringgasleitung aus Figur 16.

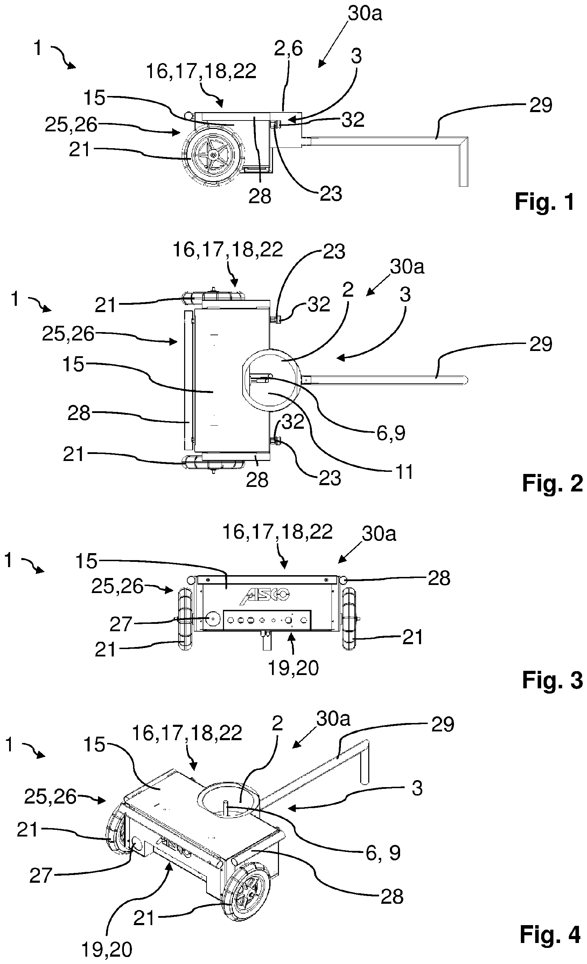

In den Figuren 1-12 sind mehrere mögliche Ausführungsvarianten einer Brandschutzübungsvorrichtung dargestellt, die im Ganzen jeweils mit 1 bezeichnet sind.

Die Brandschutzübungsvorrichtung 1 ist dazu eingerichtet, mittels wenigstens einer ersten Brennervorrichtung 2 einen Brand zu simulieren, indem durch die Brennervorrichtung 2 ein Brennstoff als eine Flamme abbrennbar ist. Die hier dargestellten Ausführungsvarianten nutzen jeweils Gas als Brennstoff, so dass die Brennervorrichtung 2 als Gasbrenner ausgestaltet ist. Es ist jedoch auch denkbar, einen anderen fluidischen Brennstoff zu verwenden.

Man unterscheidet Brände in verschiedenen Brandklassen. So werden Brände fester Stoffe (Feststoffbrände) durch andere Löschmittel als zum Beispiel Brände von flüssigen oder flüssig werdenden Stoffen (Flüssigkeitsbrände) gelöscht. Um die richtige Wahl des Löschmittel, also z.B. Wasser, Löschschaum, Kohlendioxid, Pulver, zu trainieren, kann die Brandschutzübungsvorrichtung 1 zur Simulation eines Feststoffbrandes und/oder eines Flüssigkeitsbrandes eingerichtet sein oder werden.

Dies wird dadurch erreicht, dass die Brandschutzübungsvorrichtung 1 einen modularen Aufbau aufweist, so dass die Anzahl der durch Brennervorrichtungen 2, 4, 5 ausgebildeten Brandstufen durch einen Nutzer bedarfsgerecht auswählbar ist. Eine erfindungsgemäße Brandschutzübungsvorrichtung 1 kann somit mehrere Module 30a, 30b, 30c umfassen.

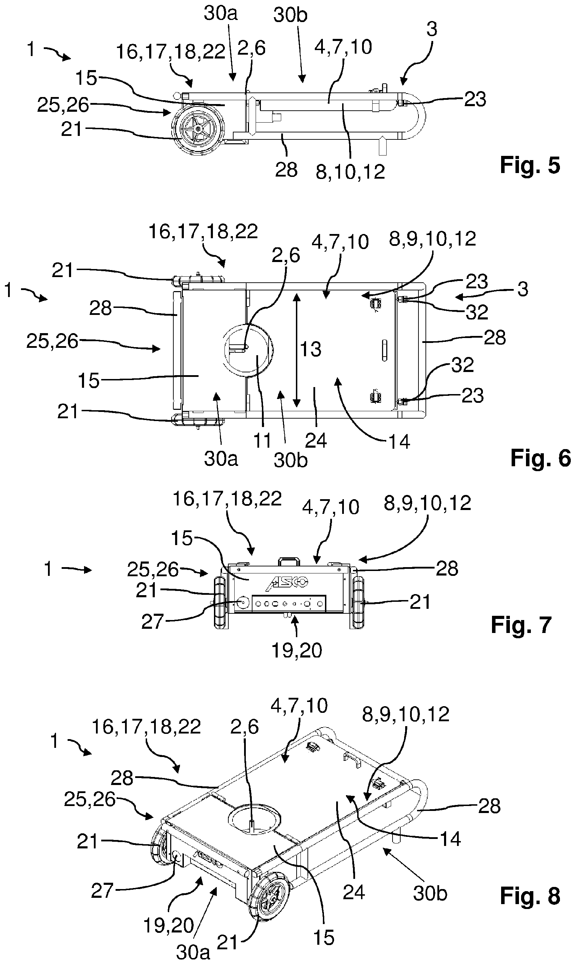

Daher weist die Brandschutzübungsvorrichtung 1 wenigstens eine Kopplungsstelle 3 zur Erweiterung der Brandschutzübungsvorrichtung 1 mit wenigstens einer weiteren Brennervorrichtung 4, 5 auf. Somit können zum Beispiel Brände anderer Brandklassen und/oder unterschiedlicher Größe erzeugt werden. Beispielsweise kann über eine erste Kopplungsstelle 3 ein Basismodul 30a mit einem ersten Anbaumodul 30b der Brandschutzübungsvorrichtung 1 koppelbar sein, wie in Figur 5 illustriert.

In den Fig. 1-4 ist eine erste Ausführungsvariante einer Brandschutzübungsvorrichtung 1 gezeigt, die lediglich als eine Basisvariante (Basismodul 30a) mit nur einer ersten Brennervorrichtung 2 ausgebildet ist. Die erste Brennervorrichtung 2 ist hier als ein Punktbrenner 6 ausgebildet. Ein Punktbrenner 6 kann dazu eingerichtet sein, einen Brennstoff wie Gas, lokal auf einen Austrittsbereich begrenzt, also insbesondere nicht flächig, ausströmen zu lassen. Vorzugsweise weist ein Punktbrenner 6 eine Austrittsöffnung 9 auf, an welcher Brennstoff während des Betriebes austritt und entzündet wird. Mittels eines Punktbrenners 6 können insbesondere Feststoffbrände simuliert werden. D.h. das Basismodul 30a kann insbesondere einen "Trockenbrenner" realisieren. Durch die Basisvarianten können bereits eine Vielzahl von Brandübungen durchgeführt werden, so dass für diese Zwecke Gewicht eingespart ist.

Die in den Fig. 1-4 gezeigte Basisversion kann um wenigstens eine zweite Brennervorrichtung 4 und/oder eine dritte Brennervorrichtung 5 zu einer erfindungsgemäßen Brandschutzübungsvorrichtung 1 erweitert werden. Beispiele dafür sind in den weiteren Figuren 5-12 gezeigt.

In den Fig. 5-8 ist eine erfindungsgemäß ausgestaltete Brandschutzübungsvorrichtung 1 gezeigt, die eine erste Brennervorrichtung 2 und eine zweite Brennervorrichtung 4 aufweist. Die erste Brennervorrichtung 2 wird dabei von dem zuvor beschriebenen Basismodul 30a bereitgestellt, während die zweite Brennervorrichtung 4 von einem ersten Anbaumodul 30b bereitgestellt ist. Das Anbaumodul 30b ist dabei über die Koppelstelle 3 mit dem Basismodul 30a mechanisch gekoppelt. Dadurch können beide Module 30a, 30b gemeinsam bewegt werden.

Hierbei ist die zweite Brennervorrichtung 4 bzw. das erste Anbaumodul 30b schlauchlos über eine (Gas-)Anschlussstelle 23 (Vgl. Fig.1 und Figur 2) an die zweite Brennervorrichtung 4 bzw. das Basismodul 30a gekoppelt. Über die Anschlussstelle 23 kann Gas von der zweiten Brennervorrichtung 4 in die dritte Brennervorrichtung 5 gefördert werden. Die Gas-Anschlussstelle 23 ist hierbei in Form eines Kupplungsventils 31 ausgebildet. Genauer ist ein Kupplungselement 32 des Kupplungsventils 31 an dem Basismodul 30a ausgebildet (Vgl. Figur 1 und Figur 2) und das erste Anbaumodul 30b weist (auf der dem Basismodul 30a zugewandten Seite) ein korrespondierendes Gegenkupplungselement 33 des Kupplungsventils 31 auf (in den Figuren 5 und 6 nicht sichtbar).

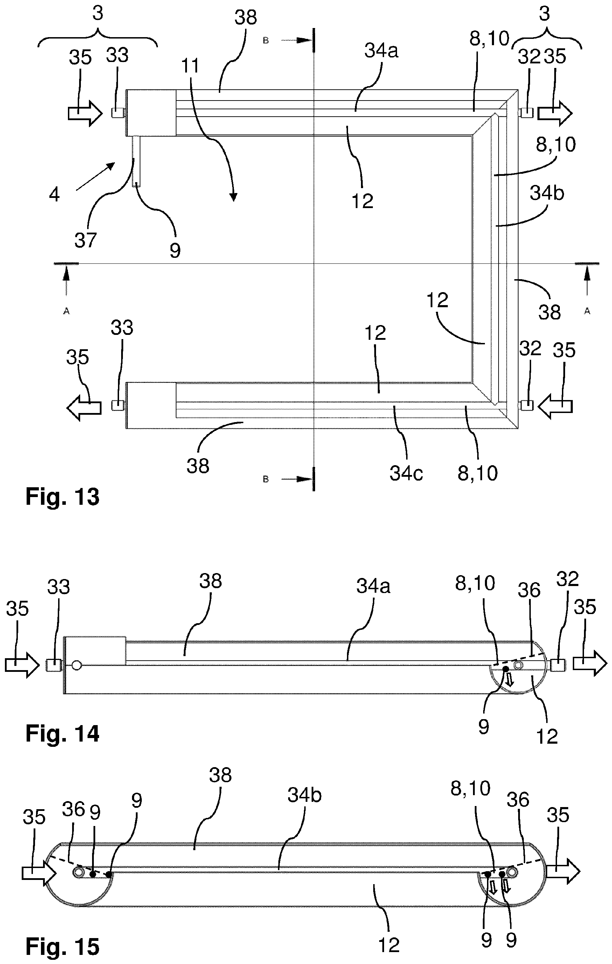

Die erste Brennervorrichtung 2 ist wie bei der Basisversion (Basismodul 30a - Vgl. Figur 1) als ein Punktbrenner 6 ausgebildet. Die zweite Brennervorrichtung 4 ist in der gezeigten Ausführungsform als ein Rahmenbrenner 7 ausgebildet. Ein Rahmenbrenner 7 unterscheidet sich gegenüber einem Punktbrenner 6 dadurch, dass damit ein flächiger Brand, beispielsweise ein Flüssigkeitsbrand, simuliert werden kann. Somit kann also die zweite Brennervorrichtung 4 einen "Flüssigbrenner" realisieren, wie noch genauer anhand der Figuren 13 bis 15 erläutert werden wird.

Die zweite Brennervorrichtung 4 ist hier ebenfalls als ein Gasbrenner ausgebildet und weist daher wenigstens eine Gasleitung 8 mit mehreren Austrittsöffnungen 9 auf. Die Austrittsöffnungen 9 sind entlang der Gasleitung 8 ausgebildet und erlauben das Ausströmen von Gas während des Betriebes an mehreren Stellen gleichzeitig, so dass ein flächiger Brand entzündbar ist. Dadurch lassen sich besonders gut Flüssigkeitsbrände simulieren.

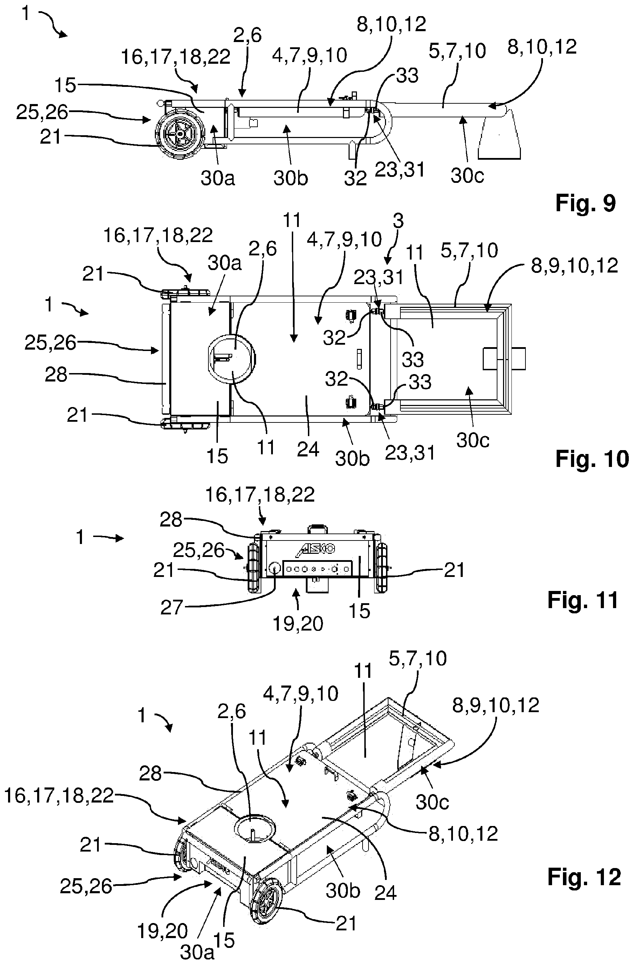

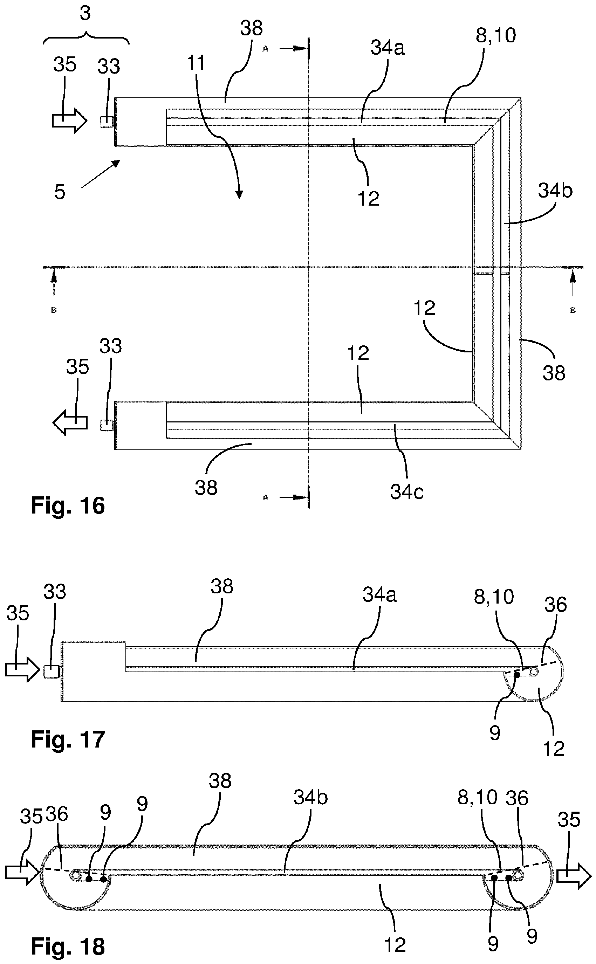

Wie die Aufsicht der Figur 13 zeigt, ist die Gasleitung 8 der zweiten Brennervorrichtung 4 als eine Ringgasleitung 10 ausgestaltet. Hierzu sind auf der dem Basismodul 30a zugewandten Seite (links in Figur 13) zwei Gegenkupplungselemente 33 und auf der gegenüberliegenden, dem zweiten Anbaumodul 30c zugewandten, Seite (rechts in Figur 13) entsprechend zwei Kupplungselemente 32 ausgebildet. Wie bereits zuvor beschrieben, dienen die beiden linken Gegenkupplungselemente 33 dazu, mit den korrespondierenden Kupplungselementen 32 des Basismoduls 30a gekoppelt zu werden (Vgl. Fig. 2). Die zwei Kupplungselemente 32 auf der rechten Seite der Figur 13 dienen dazu, mit entsprechenden Gegenkupplungselementen 33 des zweiten Anbaumoduls 30c gekoppelt zu werden, die in links in Figur 16 und auch in den Figuren 9 und 10 zu erkennen sind. Die Kupplungselemente 32 sind hierbei selbstschließend ausgestaltet, können aber durch Einkoppeln des jeweiligen Gegenkupplungselements 33 geöffnet werden.

Wie anhand der Blockpfeile in Figur 13, die einen möglichen Gasfluss durch die Gasleitung 8 illustrieren, ersichtlich ist, kann das Gas vom Basismodul 30a ausgehend durch die Ringgasleitung 10 des ersten Anbaumoduls 30b / der zweiten Brennervorrichtung 4 zurück zum Basismodul 30a strömen, sodass ein Gaskreislauf gebildet ist. Ist hierbei das zweite Anbaumodul 30c nicht angekoppelt, so sind die beiden ganz rechts in Figur 13 zu erkennenden Kupplungselemente 32 verschlossen, sodass aus diesen kein Gas ausströmt. (Die Kupplungselemente 32 weisen hierfür selbstschließende Ventile auf, die durch Einkoppeln des entsprechenden Gegenkoppelelements 33 öffenbar sind).

Ein Rahmenbrenner 7 kann so aufgebaut sein, dass er wenigstens zwei voneinander separat ausgebildete Gasleitungen 8 aufweist, die beabstandet voneinander angeordnet sind und vorzugsweise über unterschiedliche Anschlussstellen 23 der Kopplungsstelle 3 anschließbar sind. Oder der Rahmenbrenner 7 kann eine Ringgasleitung 10 aufweisen, die wenigstens eine umlaufende Gasleitung 8 aufweist, wie im Beispiel der Figur 13 illustriert. Diese kann auch beispielsweise über nur eine Anschlussstelle 23 (aber auch mehrere wie in Figur 13) anschließbar sein. Entscheidend dabei ist lediglich, dass wenigstens zwei beabstandet voneinander angeordnete Gasleitungen 8 oder Leitungsabschnitte 34a, 34c (Vgl. Figur 13) einer Ringgasleitung 10 vorliegen.

Auch die dritte Brennervorrichtung 5, die in den Figuren 16-18 im Detail illustriert ist, weist eine solche Ringgasleitung 8 mit zwei beabstandeten Leitungsabschnitten 34a, 34c auf.

Um die Sauerstoffversorgung eines flächigen Brandes, der mittels einer zweiten Brennervorrichtung 4 erzeugbar ist, zu verbessern, weist die in den Fig. 5-8 gezeigte Ausführungsvariante der Brandschutzübungsvorrichtung 1 eine Sauerstoffzuführöffnung 11 auf (Vgl. auch Figur 13). Durch diese kann Luft von einem Unterboden her zum Brandherd angesaugt werden. Somit kann eine besonders homogen ausgebildete Flamme erzeugt werden. Vorzugsweise kann die Sauerstoffzuführöffnung 11 als Freiraum ausgebildet werden, so dass in diesem Bereich, insbesondere bis zum Boden, auf dem die Brandschutzübungsvorrichtung 1 steht, keine Hindernisse in Form von Bauteilen angeordnet sind.

An der zweiten Brennervorrichtung 4 ist eine weitere Kopplungsstelle 3 zum Anschluss einer dritten Brennervorrichtung 5 ausgebildet (Vgl. Figur 6 sowie Figur 13 - dort rechts). Die Kopplungsstelle 3 umfasst hierbei (mindestens) eine (Gas-)Anschlussstelle 23 (Vgl. Figur 6 und 10) .

In den Fig. 5-8 ist die zweite Brennervorrichtung 4 und die Sauerstoffzuführöffnung 11 durch eine Abschirmvorrichtung 24, die nachfolgend noch genauer beschrieben wird, abgedeckt. In dieser Stellung ist die zweite Brennervorrichtung 4 abgestellt und kann nicht in Betrieb genommen werden.

Ein Beispiel für eine Ausführungsvariante einer erfindungsgemäßen Brandschutzübungsvorrichtung 1 mit drei Brandstufen bzw. drei Modulen 30a, 30b, 30c ist in den Figuren 9-12 dargestellt. Diese Brandschutzübungsvorrichtung 1 weist eine dritte Brennervorrichtung 5 auf, die ebenfalls als ein Rahmenbrenner 7 ausgestaltet ist (Vgl. dazu Figur 16) und eine Erweiterungsstufe der zweiten Brennervorrichtung 4 darstellt, um einen größeren Flüssigkeitsbrand simulieren zu können. Die erste Brennervorrichtung 2 wird dabei von dem zuvor beschriebenen Basismodul 30a bereitgestellt, während die zweite Brennervorrichtung 4 von dem zuvor beschriebenen ersten Anbaumodul 30b und die dritte Brennervorrichtung 5 von einem zweiten Anbaumodul 30c bereitgestellt ist (Vgl. Figur 12).

Hierzu ist die dritte Brennervorrichtung 5 bzw. das zweite Anbaumodul 30c schlauchlos über (mindestens) eine weitere (Gas-) Anschlussstelle 23 (Vgl. die Figuren 9 und 10) an die zweite Brennervorrichtung 4 bzw. das erste Anbaumodul 30b gekoppelt. Über diese Anschlussstelle 23 kann Gas von der zweiten Brennervorrichtung 4 in die dritte Brennervorrichtung 5 gefördert werden. Die Gas-Anschlussstelle 23 ist hierbei erneut in Form eines Kupplungsventils 31 ausgebildet. Genauer ist ein Kupplungselement 32 des Kupplungsventils 31 an dem ersten Anbaumodul 30b ausgebildet (Vgl. Figur 13 rechts) und das zweite Anbaumodul 30c weist ein korrespondierendes Gegenkupplungselement 33 des Kupplungsventils 31 auf (Vgl. Figur 9 und 10 sowie auch die Figur 16 links).

Wie anhand der Blockpfeile in Figur 16, die einen möglichen Gasfluss durch die Gasleitung 8 illustrieren, ersichtlich ist, kann das Gas vom ersten Anbaumodul 30b ausgehend durch die Ringgasleitung 10 des zweiten Anbaumoduls 30c / der dritten Brennervorrichtung 5 zurück zum ersten Anbaumodul 30b und von dort zum Basismodul 30a strömen, sodass auch hier wieder ein Gaskreislauf gebildet ist.

Auch die dritte Brennervorrichtung 5 weist eine Sauerstoffzuführöffnung 11 auf (Vgl. Figur 16), die durch die wenigstens eine Gasleitung 8, genauer deren Rinne 12, begrenzt ist. Somit kann die Sauerstoffzuführöffnung 11 der zweiten Brennervorrichtung 4 und/oder der dritten Brennervorrichtung 5 besonders groß ausgebildet werden.

Zwischen den Gasleitungen 8 oder zwischen den Leitungsabschnitten 34a, 34b, 34c der wenigstens einen Gasleitung 8 ist keine Wasserwanne und/oder ein sonstiges Strömungshindernis angeordnet, um den Zustrom von Sauerstoff nicht zu behindern. Dies gilt sowohl für die zweite als auch die dritte Brennervorrichtung 4, 5.

Die Austrittsöffnungen 9 (Durchmesser typischerweise: 2 mm) der wenigstens einen Gasleitung 8 sind in regelmäßigen Abständen (typischerweise ca. 100 mm) zueinander und/oder über die gesamte oder nahezu die gesamte Länge der wenigstens einen Gasleitung 8 ausgebildet, so dass ein gleichzeitiges Ausströmen von Gas an unterschiedlichen Stellen möglich ist.

Die zweite Brennervorrichtung 4 und/oder die dritte Brennervorrichtung 5 können jeweils zumindest eine Rinne 12 aufweisen, in welcher die wenigstens eine Gasleitung 8 oder die Gasleitungen 8 angeordnet sind, wie dies in den Figuren 13 bis 18 im Detail illustriert ist

Die wenigstens eine Rinne 12 kann so ausgestaltet sein, dass in Betriebsstellung Wasser in die Rinne 12 eingefüllt ist und die darin angeordnete Gasleitung 8 oder zumindest die Austrittsöffnungen 9 unter Wasser liegen. Dadurch wird das ausströmende Gas noch homogener verteilt und zudem kann die entfachbare Flamme beabstandet zur Gasleitung entzündet werden. Durch das Wasser kann somit eine Barriere erzeugt werden, die zum Beispiel einen Sicherheitsabstand der Flamme zu den empfindlichen Gasleitungen 8 einrichtbar macht.

Um die auf der Wasseroberfläche der U-förmigen Rinne 12 entstehende Flamme kegelförmig nach innen zu führen, so den von der Sauerstoffzuführöffnung 11 bereitgestellten Luftstrom optimal zu entfachen und zudem eine für den Übenden von außen geschlossene Flammenfront zu erzeugen, sind die äußeren Ränder der Rinne 12 jeweils nach oben gezogen, um ein Flammenleitblech 38 auszubilden (Vgl. die Figuren 13-18). Dieses Flammenleitblech 38 bietet auch einen zusätzlichen Hitzeschutz, etwa für die Räder des Basismoduls 30a. Das Flammenleitblech 38 schirmt somit die entstehende Flamme nach außen ab. Um die gewünschte Wirkung zu erzielen, ist das Flammenleitbleich 38 dabei entlang der gesamten Ringgasleitung 10 ausgeführt und mindestens 1 cm über den Höchststand 36 des Wassers geführt.

Wie in den Figuren 14, 15, 17 und 18 zu sehen ist, sind die Austrittsöffnungen 9 jeweils nach unten gerichtet, sodass das Gas aus der Gasleitung 8 in einer Richtung ausströmt, die von der Wasseroberfläche (Vgl. den maximalen Wasserstand 36 in den Figuren, der beim vollständigen Befüllen der Rinne 12 erreicht wird) des in die Rinne 12 eingefüllten Wassers weg zeigt. Hierdurch kann eine noch bessere Homogenisierung des Gases bei der Verwirbelung im Wasser erreicht werden, da der Strömungsweg des Gases im Wasser verlängert ist, im Vergleich zu einer Ausrichtung der Austrittsöffnungen 9 nach oben.

Bei der zweiten Brennvorrichtung 4 sind die Austrittsöffnungen 9 dabei durch die von den beiden (selbstschließenden) Kupplungselementen 32 bereitgestellten Ventile gesichert, die ein Eindringen von Wasser in die Gasleitung 8 verhindern, wie im Folgenden erläutert wird.

Zur Inbetriebnahme der zweiten Brennervorrichtung 4 wird zunächst das erste Anbaumodul 30b mit dem Basismodul 30a über die beiden Kupplungsventile 31 / die Kopplungsstelle 3, d.h. durch jeweiliges Einkoppeln des Gegenkupplungselements 33 der zweiten Brennervorrichtung 4 in das jeweilige Kupplungselement 32 des Basismoduls 30a (Vgl. Fig. 2), mechanisch miteinander gekoppelt. Hierbei strömt zunächst noch kein Gas in die Ringgasleitung 10 ein, da das entsprechende Magnetsteuerventil im Basismodul 30a zunächst geschlossen bleibt. Anschließend kann Wasser in die Rinne 12 des Anbaumoduls 30b / der zweiten Brennervorrichtung 4 eingefüllt werden (vgl. Figur 13). Hierbei strömt das Wasser nicht in die Gasleitung 8 durch die Austrittsöffnungen 9 ein, da die Kupplungselement 32 der zweiten Brennervorrichtung 4 (ganz rechts in Figur 13) selbstschließend sind, und somit das Volumen innerhalb der Gasleitung 8 abgeschlossen bleibt (das Wasser kann daher die in der Gasleitung befindliche Luft nicht verdrängen). Wird nun das zugeordnete Magnetsteuerventil durch die weiter unten beschriebene Steuerungsvorrichtung 15 geöffnet, so strömt Gas über das beschriebene Kupplungsventil 31 von dem Basismodul 30a in das Anbaumodul 30b, genauer in dessen Ringleitung 10 und dort aus den Austrittsöffnungen 9, wobei das Gas beim Durchströmen des Wassers wie zuvor beschrieben homogenisiert wird.

Das Zünden des Gases, welches aus der Ringgasleitung 10 der zweiten Brennervorrichtung 4 austritt erfolgt über den in Figur 13 zu sehenden Zündflammenspender 37. Dieser ist an die Gasleitung 8 angeschlossen und weist eine Austrittsöffnung 9 auf, die benachbart zur ersten Brennervorrichtung 2 des Basismoduls 30a angeordnet ist. Daher kann zunächst das Gas, welches aus dem Zündflammenspender 37 austritt sicher mit einer Initialflamme gezündet werden, die die erste Brennervorrichtung 2 bereitstellt (eine Brenndauer von 4-5 Sekunden ist hierzu ausreichend). Die Initialflamme springt dabei auf das Gas über, welches aus dem Zündflammenspender 37 ausströmt. Anschließend kann dann die so entstandene Zündflamme des Zündflammenspenders 37 das restliche Gas entzünden, welches aus der Ringgasleitung 10 austritt. Dadurch kann ohne zusätzliche Zündquelle im Anbaumodul 30b die dortige Flamme sicher, ohne größere Gasverpuffung, entzündet werden, was zum einem die Sicherheit erhöht und zum anderen das Anbaumodul 30b einfach hält.

Die Inbetriebnahme der dritten Brennervorrichtung 5 erfolgt analog hierzu, wobei diese (aufgrund des geringeren Abstands - Vgl. Fig. 10) direkt über die Flamme gezündet werden kann, die die zweite Brennervorrichtung 4 zur Verfügung stellt.

Vorbekannte Brandschutzübungsvorrichtungen verwenden teilweise Wasserwannen, die jedoch ein viel größeres Fassungsvolumen als die Rinne 12 oder die Rinnen 12 (Gesamtfassungsvolumen aller Rinnen 12) aufweisen. Dadurch kommt es bei einer Löschübung zu einer größeren Menge an mit dem Löschmittel kontaminierten Wasser als bei der Brandschutzübungsvorrichtung 1, wie sie hierin beschrieben und/oder beansprucht ist. Insbesondere ist es möglich, die Brandschutzübungsvorrichtung 1 durch die Verwendung von weniger als 10 Liter, insbesondere weniger als 7,5 Liter, insbesondere weniger als 5 Liter, insbesondere weniger als 2,5 Liter, insbesondere weniger als 1,5 Liter, in der hierin beschriebenen Weise zu betreiben.

Die Brandschutzübungsvorrichtung 1 weist eine Steuerungsvorrichtung 15, insbesondere eine elektronische Steuervorrichtung 15, auf, mittels welcher eine Einstellung eines Brandmodus und/oder das Initiieren und Abstellen eines simulierten Brandes möglich ist. Durch die Steuerungsvorrichtung 15 kann zum Beispiel eine Ventilsteuerung vorgenommen werden, um die Gaszufuhr zwischen den Brennervorrichtungen 2, 4, 5 zu regeln. So kann insbesondere vorgesehen sein, dass ein An- und Abschalten eines Gasstromes über Magnetventile geregelt ist, deren Verstellung zwischen einer Offen- und einer Schließstellung anhand der Steuerungsvorrichtung 15 steuerbar und/oder programmierbar ist. Insbesondere kann es vorgesehen sein, dass in der Steuerungsvorrichtung 15 wenigstens ein Übungsprogramm zur Simulation eines Brandes hinterlegt ist, so dass durch dessen Initiierung ein automatisiertes Ablaufen einer Brandschutzübung erreichbar ist. So können beispielsweise die Größe und/oder eine Rauchentwicklung abhängig von der Zeit variieren, insbesondere indem eine automatisierte Ventilsteuerung computergestützt ausgeführt wird.

Die Brandschutzübungsvorrichtung 1 aus den Fig. 1-12 weist einen als Akku 17 ausgebildeten Energiespeicher 16 auf, um die Steuerungsvorrichtung 15 autark, also ohne Stromnetzanschluss, betreiben zu können.

Weiter hat die Brandschutzübungsvorrichtung 1 einen (internen) Gasspeicher 18, um die Brennervorrichtungen 2, 4, 5 mit Gas versorgen zu können. Der Gasspeicher 18 kann hierbei z.B. auswechselbar ausgebildet sein, um einen leeren durch einen aufgefüllten zu ersetzen.

Zur Vereinfachung des Transports der Brandschutzübungsvorrichtung 1 weist diese zwei Räder 21 auf, um sie leichter schieben oder ziehen zu können.

Die Brandschutzübungsvorrichtung 1 weist eine Deichsel 29 auf, damit ein Nutzer die Brandschutzübungsvorrichtung 1 darüber ziehen oder schieben kann.

Aufgrund der modularen Bauweise ist es zudem möglich, die Brandschutzübungsvorrichtung 1 vor dem Transport zu zerlegen. Insbesondere können die zweite Brennervorrichtung 4 und/oder die dritte Brennervorrichtung 5 von der Basisversion abgenommen werden. Das heißt, die drei Module 30a, 30b, 30c können einfach voneinander separiert und getrennt voneinander transportiert und/oder gelagert werden, je nach Bedarf. Nach dem Trennen kann hierbei kein Gas ausströmen, da die Anschlussstellen 23 als selbstschließende Kupplungsventile 31 ausgestaltet sind.

Die Abschirmvorrichtung 24, die bereits zuvor erwähnt wurde, ist derart ausgebildet, dass sie zwischen einer Betriebsstellung und einer Deaktivierungsstellung verstellbar ist. Die Abschirmvorrichtung 24 ist dabei im gezeigten Ausführungsbeispiel um eine Schwenkachse umklappbar.

In Betriebsstellung liegt die Abschirmvorrichtung 24 oben auf der Steuerungsvorrichtung 15 auf und schirmt diese gegen umschlagende Flammen ab.

In Deaktivierungsstellung (siehe Figuren 8-12) liegt die Abschirmvorrichtung 24 wenigstens auf der zweiten Brennervorrichtung 4 und/oder einer Sauerstoffzuführöffnung 11 auf und schützt dabei vor allem die Brennervorrichtung 2 während des Transports, wenn diese nicht abgenommen wird.

Zur Entzündung einer Flamme weist die Brandschutzübungsvorrichtung 1 eine Zündungsvorrichtung 22, insbesondere eine Hochspannungs-Zündungsvorrichtung, auf. Diese kann zum Beispiel ebenfalls über den Akku 17 mit Strom versorgt werden.

Die Brandschutzübungsvorrichtung 1 weist eine Raucherzeugungsvorrichtung 25 auf, um einem Nutzer ein realitätsnahes Erleben eines Brandes zu ermöglichen. Die Raucherzeugungsvorrichtung 25 ist dazu eingerichtet, Rauch zu erzeugen. Dazu weist sie beispielsweise eine Heizeinheit 26 und/oder wenigstens eine Behälterschnittstelle 27 zum Anschluss eines Rauchmittelbehälters auf. Bevorzugt ist der Rauchmittelbehälter in der Brandschutzübungsvorrichtung 1, bevorzugt im Basismodul 30a, angeordnet, sodass dieser mit selbiger transportiert werden kann. Das Rauchmittel kann durch die Heizeinheit 26 verdampft oder verbrannt und über eine Rauchgasleitung zum Brandherd geleitet werden.

Zur Stabilisierung der Brandschutzübungsvorrichtung 1 weist diese wenigstens ein Trägergestell 28 auf. Das wenigstens eine Trägergestell 28 kann mehrere Griffflächen ausbilden, um die Brandschutzübungsvorrichtung 1 oder Teile davon einfacher tragen zu können. Insbesondere können/kann zumindest die zweite Brennervorrichtung 4 und/oder die dritte Brennervorrichtung 5 ein insbesondere die Gasleitungen 8 nach außen abschirmendes Trägergestell 28 aufweisen. Somit können Beschädigungen der Gasleitungen 8 beispielsweise bei Stößen besser verhindert werden.

Um zum Beispiel einen Mülleimerbrand und/oder einen Bildschirmbrand oder einen sonstigen speziellen Brand simulieren zu können, weist die Brandschutzübungsvorrichtung 1 wenigstens eine Aufsetzeinheit auf, die mit der ersten Brennervorrichtung 2 koppelbar ist. Während des Betriebes der Brandschutzübungsvorrichtung 1 erzeugte Flammen können so geleitet werden, dass sie durch eine Öffnung, beispielsweise eine Mülleimeröffnung oder eine Front eines Bildschirms, herauslodern.

### Bezugszeichenliste

- 1: Brandschutzübungsvorrichtung
- 2: Erste Brennervorrichtung
- 3: Kopplungsstelle
- 4: Zweite Brennervorrichtung
- 5: Dritte Brennervorrichtung
- 6: Punktbrenner
- 7: Rahmenbrenner
- 8: Gasleitung
- 9: Austrittsöffnung
- 10: Ringgasleitung
- 11: Sauerstoffzuführöffnung
- 12: Rinne
- 13: Abstand zwischen Gasleitungen oder Abschnitten der Gasleitung
- 14: Fläche
- 15: Steuerungsvorrichtung
- 16: Energiespeicher
- 17: Akku
- 18: Gasspeicher
- 19: Stromnetzanschluss
- 20: Gasnetzanschluss
- 21: Rad
- 22: Zündungsvorrichtung
- 23: Anschlussstelle
- 24: Abschirmvorrichtung
- 25: Raucherzeugungsvorrichtung
- 26: Heizeinheit
- 27: Behälterschnittstelle
- 28: Trägergestell
- 29: Deichsel
- 30: Modul (von 1)
- 31: Kupplungsventil
- 32: Kupplungselement
- 33: Gegenkupplungselement
- 34: Leitungsabschnitt (von 10)
- 35: Gasfluss
- 36: Wasserstand (nach vollständiger Befüllung von 12 mit Wasser)
- 37: Zündflammenspender
- 38: Flammenleitblech

## Patentansprüche

1. **Brandschutzübungsvorrichtung (1),** zur Simulation eines Flüssigkeitsbrandes, mit
- wenigstens einer ersten Brennervorrichtung (2) und mit
- einer zweiten Brennervorrichtung (4), die wenigstens eine Gasleitung (8) mit mehreren Austrittsöffnungen (9) aufweist, **dadurch gekennzeichnet,**
- **dass** die Gasleitung (8) der zweiten Brennervorrichtung (4) zumindest teilweise in einer Rinne (12) angeordnet ist, die dazu eingerichtet ist, in Gebrauchsstellung mit Wasser gefüllt zu sein, sodass die wenigstens eine Gasleitung (8) unter Wasser liegt.

2. Brandschutzübungsvorrichtung (1) nach Anspruch 1,
- wobei die zweite Brennervorrichtung (4) wenigstens zwei beabstandet zueinander angeordnete Gasleitungen (8) aufweist und dass zwischen den Gasleitungen (8) eine Sauerstoffzuführöffnung (11) ausgebildet ist,
- vorzugsweise wobei zwischen den wenigstens zwei Gasleitungen (8) keine Wasserwanne angeordnet ist.

3. Brandschutzübungsvorrichtung (1) nach einem der vorstehenden Ansprüche, wobei die Austrittsöffnungen (9) der Gasleitung (8) nach unten gerichtet sind,
- insbesondere sodass ein aus der Gasleitung (8) ausströmender Gasstrom von einer Wasseroberfläche des eingefüllten Wassers weg zeigt.

4. Brandschutzübungsvorrichtung (1) nach dem vorhergehenden Anspruch, wobei die Austrittsöffnungen (9) mit Ventilen gesichert sind, die ein Eindringen des Wassers in die Gasleitung (8) verhindern.

5. Brandschutzübungsvorrichtung (1) nach einem der vorstehenden Ansprüche, wobei die Brandschutzübungsvorrichtung (1) eine dritte Brennervorrichtung (5) aufweist,
- insbesondere wobei die dritte Brennervorrichtung (5) als wenigstens ein Rahmenbrenner (7) ausgestaltet ist.

6. Brandschutzübungsvorrichtung (1) nach einem der Ansprüche 2 bis 5, wobei eine Fläche eines Öffnungsquerschnitts der Sauerstoffzuführöffnung (11) mindestens die Hälfte einer Fläche (14) zwischen den zwei sich gegenüberliegenden Gasleitungen (8) beträgt.

7. Brandschutzübungsvorrichtung (1) nach einem der vorstehenden Ansprüche, wobei die Brandschutzübungsvorrichtung (1) eine Steuerungsvorrichtung (15) aufweist, mittels welcher eine Einstellung eines Brandmodus und/oder das Initiieren und Abstellen eines simulierten Brandes möglich ist.

8. Brandschutzübungsvorrichtung (1) nach einem der vorstehenden Ansprüche, wobei die Brandschutzübungsvorrichtung (1) wenigsten einen Energiespeicher (16), insbesondere einen Akku (17) und/oder einen Gasspeicher (18), aufweist und/oder dass die Brandschutzübungsvorrichtung (1) einen Netzanschluss (19) und/oder einen Gasanschluss (20) aufweist.

9. Brandschutzübungsvorrichtung (1) nach einem der vorstehenden Ansprüche, wobei die Brandschutzübungsvorrichtung (1) dazu eingerichtet ist, durch die Brennervorrichtungen (2, 4, 5) einrichtbare Brennstufen modular nach Bedarf erweitern oder reduzieren zu können.

10. Brandschutzübungsvorrichtung (1) nach einem der vorstehenden Ansprüche, wobei die Brandschutzübungsvorrichtung (1) wenigstens eine Kopplungsstelle (3) zur Erweiterung der Brandschutzübungsvorrichtung (1) mit wenigstens einer weiteren Brennervorrichtung (4, 5) aufweist und die wenigstens eine Kopplungsstelle (3) wenigstens eine Anschlussstelle (23) für eine Gasleitung (8) aufweist, wobei die Anschlussstelle (23) als ein Kupplungsventil (31) ausgebildet ist,
- insbesondere sodass ein erstes Modul (30a, 30b) mit einem weiteren Modul (30b, 30c) über die wenigstens eine Anschlussstelle (23) schlauchlos koppelbar ist.

11. Brandschutzübungsvorrichtung (1) nach Anspruch 10, wobei das Kupplungsventil (31) ein Kupplungselement (32) umfasst, das mit einem korrespondierenden Gegenkopplungselement (32) koppelbar ist und
- wobei das Kupplungselement mit der ersten Brennervorrichtung (2) und das Gegenkupplungselement mit einer weiteren, insbesondere der zweiten oder dritten, Brennervorrichtung (4, 5) verbunden ist.

12. Brandschutzübungsvorrichtung (1) nach einem der vorstehenden Ansprüche, wobei die Brandschutzübungsvorrichtung (1) eine Abschirmvorrichtung (24) aufweist, die zwischen einer Betriebsposition und einer Abschaltposition verstellbar ist, insbesondere um eine Schwenkachse verstellbar ist,
- vorzugsweise wobei die Abschirmvorrichtung (24) in Betriebsposition eine oder die Steuerungsvorrichtung (15) gegen Flammen schützt und/oder
- wobei die Abschirmvorrichtung (24) in Abschaltposition die Sauerstoffzuführöffnung (11) und/oder wenigstens eine Brennervorrichtung (2, 4, 5) abdeckt.

13. Brandschutzübungsvorrichtung (1) nach einem der vorstehenden Ansprüche, wobei die Brandschutzübungsvorrichtung (1) eine Raucherzeugungsvorrichtung (25) aufweist, die eine Heizeinheit (26) und/oder wenigstens eine Behälterschnittstelle (27) zum Anschluss eines Rauchmittelbehälters aufweist.

14. Brandschutzübungsvorrichtung (1) nach Anspruch 13, wobei die Raucherzeugungsvorrichtung (25) eine Rauchgasleitung aufweist, um das durch die Raucherzeugungsvorrichtung (25) erzeugte Rauchgas zum Ort des Feststoffbrandes und/oder des Flüssigkeitsbrandes zu transportieren.

15. Brandschutzübungsvorrichtung (1) nach einem der vorstehenden Ansprüche, wobei die Brandschutzübungsvorrichtung (1) wenigstens eine Aufsetzeinheit aufweist, die mit der ersten Brennervorrichtung (2) koppelbar ist, um ein spezielles Brandszenario zu simulieren,
- vorzugsweise wobei die wenigstens eine Aufsetzeinheit in Form eines Mülleimers und/oder in Form eines Bildschirms ausgebildet ist.

## Claims

1. **Fire-safety-training device (1)** for simulating a liquid fire, having
- at least one first burner device (2), and having
- a second burner device (4) which has at least one gas line (8) with multiple exit openings (9), **characterized**
- **in that** the gas line (8) of the second burner device (4) is arranged at least partially in a channel (12) which is configured to be filled, in the position of use, with water such that the at least one gas line (8) is situated underwater.

2. Fire-safety-training device (1) according to Claim 1,
- wherein the second burner device (4) has at least two gas lines (8) which are spaced apart from one another, and in that an oxygen-supply opening (11) is formed between the gas lines (8),
- preferably wherein no water trough is arranged between the at least two gas lines (8).

3. Fire-safety-training device (1) according to either of the preceding claims, wherein the exit openings (9) of the gas line (8) are directed downwards,
- in particular so that a gas stream flowing out of the gas line (8) points away from a water surface of the water introduced.

4. Fire-safety-training device (1) according to the preceding claim, wherein the exit openings (9) are protected by valves, which prevent ingress of the water into the gas line (8).

5. Fire-safety-training device (1) according to one of the preceding claims, wherein the fire-safety-training device (1) has a third burner device (5),
- in particular wherein the third burner device (5) is designed as at least one frame burner (7).

6. Fire-safety-training device (1) according to one of Claims 2 to 5, wherein an area of an opening cross section of the oxygen-supply opening (11) is at least half an area (14) between the two oppositely situated gas lines (8).

7. Fire-safety-training device (1) according to one of the preceding claims, wherein the fire-safety-training device (1) has a control device (15) by means of which a setting of a fire mode and/or the initiation and stopping of a simulated fire is possible.

8. Fire-safety-training device (1) according to one of the preceding claims, wherein the fire-safety-training device (1) has at least one energy store (16), in particular one accumulator (17) and/or one gas store (18), and/or in that the fire-safety-training device (1) has a power-supply connection (19) and/or a gas connection (20).

9. Fire-safety-training device (1) according to one of the preceding claims, wherein the fire-safety-training device (1) is configured to be able to modularly extend or reduce, according to requirement, burning stages able to be configured by the burner devices (2, 4, 5).

10. Fire-safety-training device (1) according to one of the preceding claims, wherein the fire-safety-training device (1) has at least one coupling point (3) for extending the fire-safety-training device (1) by way of at least one further burner device (4, 5), and the at least one coupling point (3) has at least one connection point (23) for a gas line (8), wherein the connection point (23) is in the form of a coupling valve (31),
- in particular so that a first module (30a, 30b) is able to be coupled without tubes to a further coupling module (30b, 30c) via the at least one connection point (23).

11. Fire-safety-training device (1) according to Claim 10, wherein the coupling valve (31) comprises a coupling element (32) which is able to be coupled to a corresponding counterpart coupling element (32), and
- wherein the coupling element is connected to the first burner device (2) and the counterpart coupling element is connected to a further, in particular the second or third, burner device (4, 5).

12. Fire-safety-training device (1) according to one of the preceding claims, wherein the fire-safety-training device (1) has a shielding device (24) which is adjustable, in particular is adjustable about a pivot axis, between an operation position and a deactivation position,
- preferably wherein, in the operation position, the shielding device (24) protects a or the control device (15) against flames, and/or
- wherein, in the deactivation position, the shielding device (24) covers the oxygen-supply opening (11) and/or at least one burner device (2, 4, 5).

13. Fire-safety-training device (1) according to one of the preceding claims, wherein the fire-safety-training device (1) has a smoke-generation device (25) which has a heating unit (26) and/or at least one container interface (27) for connection of a smoking-material container.

14. Fire-safety-training device (1) according to Claim 13, wherein the smoke-generation device (25) has a smoke-gas line in order to transport the smoke gas generated by the smoke-generation device (25) to the location of the solid fire and/or of the liquid fire.

15. Fire-safety-training device (1) according to one of the preceding claims, wherein the fire-safety-training device (1) has at least one mounting unit which is able to be coupled to the first burner device (2) in order to simulate a specific fire scenario,
- preferably wherein the at least one mounting unit is in the form of a waste bin and/or in the form of a monitor.

## Revendications

1. **Dispositif d'exercice incendie (1)** servant à simuler un incendie de substance liquide, avec
- au moins un premier dispositif de brûleur (2) et avec
- un deuxième dispositif de brûleur (4) qui comporte au moins une conduite de gaz (8) dotée de plusieurs orifices de décharge (9), **caractérisé en ce que**
- la conduite de gaz (8) du deuxième dispositif de brûleur (4) est disposée au moins partiellement dans une gouttière (12) qui est aménagée pour être remplie d'eau en position d'utilisation de sorte que l'au moins une conduite de gaz (8) se trouve sous l'eau.

2. Dispositif d'exercice incendie (1) selon la revendication 1
- dans lequel le deuxième dispositif de brûleur (4) comporte au moins deux conduites de gaz (8) espacées entre elles, un orifice d'alimentation en oxygène (11) étant configuré entre les conduites de gaz (8), et
- dans lequel, de préférence, aucune cuve à eau n'est disposée entre les au moins deux conduites de gaz (8).

3. Dispositif d'exercice incendie (1) selon une des revendications précédentes, dans lequel les orifices de décharge (9) de la conduite de gaz (8) sont orientés vers le bas
- en particulier de sorte qu'un flux de gaz émanant de la conduite de gaz (8) s'échappe d'une surface d'eau de l'eau de remplissage.

4. Dispositif d'exercice incendie (1) selon une des revendications précédentes, dans lequel les orifices de décharge (9) sont sécurisés par des vannes qui empêchent l'eau de pénétrer dans la conduite de gaz (8).

5. Dispositif d'exercice incendie (1) selon une des revendications précédentes, lequel dispositif d'exercice incendie (1) comporte un troisième dispositif de brûleur (5),
- en particulier dans lequel le troisième dispositif de brûleur (5) est conformé comme au moins un brûleur périphérique.

6. Dispositif d'exercice incendie (1) selon une des revendications précédentes, dans lequel une surface d'une section d'orifice de l'orifice d'alimentation en oxygène (11) est au moins égale à la moitié d'une surface (14) entre les deux conduites de gaz (8) opposées.

7. Dispositif d'exercice incendie (1) selon une des revendications précédentes, lequel dispositif d'exercice incendie (1) comporte dispositif de commande (15) au moyen duquel il est possible de régler un mode d'incendie et/ou d'initier et d'arrêter un incendie simulé.

8. Dispositif d'exercice incendie (1) selon une des revendications précédentes, lequel dispositif d'exercice incendie (1) comporte au moins un réservoir d'énergie (16), en particulier une batterie (17) et/ou un réservoir de gaz (18), et/ou lequel dispositif d'exercice incendie (1) comporte une connexion au secteur (19) et/ou un raccord de gaz (20).

9. Dispositif d'exercice incendie (1) selon une des revendications précédentes, lequel dispositif d'exercice incendie (1) est aménagé pour pouvoir augmenter ou réduire de façon modulaire selon les besoins les niveaux de combustion qui peuvent être générés par les dispositifs de brûleur (2, 4, 5).

10. Dispositif d'exercice incendie (1) selon une des revendications précédentes, lequel dispositif d'exercice incendie (1) comporte au moins un point d'accouplement (3) pour permettre l'extension du dispositif d'exercice incendie (1) avec au moins un autre dispositif de brûleur (4, 5) et l'au moins un point d'accouplement (3) comporte au moins un point de raccordement (23) pour une conduite de gaz (8), lequel point de raccordement (23) est configuré comme une vanne d'accouplement (31),
- en particulier de sorte qu'un premier module (30a, 30b) peut être accouplé sans tuyau avec un autre module (30b, 30c) par l'au moins un point de raccordement (23).

11. Dispositif d'exercice incendie (1) selon une des revendications précédentes, dans lequel la vanne d'accouplement (31) comprend un élément d'accouplement (32) qui peut être accouplé avec un élément d'accouplement opposé (32) correspondant et
- dans lequel l'élément d'accouplement est relié avec le premier dispositif de brûleur (2) et l'élément d'accouplement opposé avec un autre dispositif de brûleur (4, 5), en particulier le deuxième ou le troisième.

12. Dispositif d'exercice incendie (1) selon une des revendications précédentes, lequel dispositif d'exercice incendie (1) comporte un dispositif de blindage (24) qui peut être ajusté entre une position de fonctionnement et une position d'arrêt, en particulier qui peut être ajusté autour d'un axe de rotation,
- de préférence ce dispositif de blindage (24) protégeant en position de fonctionnement un ou le dispositif de commande (15) contre les flammes et/ou ce dispositif de blindage recouvrant en position d'arrêt l'orifice d'alimentation en oxygène (11) et/ou au moins un dispositif de brûleur (2, 4, 5).

13. Dispositif d'exercice incendie (1) selon une des revendications précédentes, lequel dispositif d'exercice incendie (1) comporte un dispositif de génération de fumée (25) qui comporte une unité de chauffage (26) et/ou au moins une interface de réservoir (27) pour raccorder un réservoir de produit fumigène.

14. Dispositif d'exercice incendie (1) selon la revendication 13, dans lequel le dispositif de génération de fumée (25) comporte une conduite de gaz de fumée pour transporter le gaz de fumée généré par le dispositif de génération de fumée (25) sur le lieu de l'incendie de matière solide et/ou de l'incendie de substance liquide.

15. Dispositif d'exercice incendie (1) selon une des revendications précédentes, lequel dispositif d'exercice incendie (1) comporte au moins une unité de distribution qui peut être accouplée avec le premier dispositif de brûleur (2) pour simuler un scénario d'incendie spécial,
- de préférence l'au moins une unité de distribution étant configurée sous la forme d'une poubelle et/ou sous la forme d'un écran.
